(19) Europäisches Patentamt
European Patent Office
Office européen des brevets

(11) **EP 3 951 529 A1**

(12) **EUROPÄISCHE PATENTANMELDUNG**

(43) Veröffentlichungstag:
**09.02.2022 Patentblatt 2022/06**

(21) Anmeldenummer: **20191509.7**

(22) Anmeldetag: **18.08.2020**

(51) Internationale Patentklassifikation (IPC):
**G05B 23/02** $^{(2006.01)}$ **G06F 16/35** $^{(2019.01)}$

(52) Gemeinsame Patentklassifikation (CPC):
**G05B 23/024; G06F 16/35**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.08.2020 EP 20189396**

(71) Anmelder: **Siemens Aktiengesellschaft**
**80333 München (DE)**

(72) Erfinder: **Oelke, Daniela**
**85521 Riemerling (DE)**

(54) **ÜBERWACHUNGSVORRICHTUNG UND VERFAHREN ZUR ANOMALIEDETEKTION**

(57) Überwachungsvorrichtung zur Anomaliedetektion anhand von zeitlich fortlaufend ermittelten Sensordaten (102, z) eines technischen Systems (100), umfassend

eine Eingabeschnittstelle (201), die derart ausgebildet ist, einen neuen Sensordatenpunkt (102, z) des technischen Systems (100) zu empfangen,
eine Analyseeinheit, (202) die derart ausgebildet ist,
für den neuen Sensordatenpunkt (102, z) eine minimale Erreichbarkeitsdistanz (minRD) gegenüber einer Auswahl von benachbarten Trainingsdatenpunkten (x1, x2, x3) zu ermitteln, und für den neuen Sensordatenpunkt (102, z) eine minimale Position (xi) in der Abfolge der Trainingsdatenpunkte in einem Erreichbarkeitsdiagramm (312), das mittels einer dichtebasierten Clustering-Funktion mit vorbestimmten Trainingsdatenpunkten als Eingabewerte erstellt wurde, zu ermitteln, den neuen Sensordatenpunkt (102, z) im Erreichbarkeitsdiagramm nach der minimalen Position (xi) und vor dem Trainingsdatenpunkt, der eine größere Erreichbarkeitsdistanz als die ermittelte minimale Erreichbarkeitsdistanz (minRD) aufweist, einzufügen, den neuen Sensordatenpunkt (102, z) abhängig von seiner Position im ergänzten Erreichbarkeitsdiagramm einem bestimmten Cluster zuzuordnen und abhängig von der minimalen Erreichbarkeitsdistanz (minRD) einen Status als normal oder anormal zuzuordnen, und
eine Ausgabeschnittstelle (203), die derart ausgebildet ist, die für den neuen Sensordatenpunkt (102, z) ermittelte Zuordnung als Ergebnis der Anomaliedetektion auszugeben.

Fig. 1

**Beschreibung**

Die Erfindung betrifft eine Überwachungsvorrichtung und ein Verfahren zur Anomaliedetektion anhand von zeitlich fortlaufend ermittelten Sensordaten eines technischen Systems mit Hilfe einer dichtebasierten Clustering-Funktion.

Zur Überwachung eines technischen Systems werden üblicherweise Parameter, die für den Zustand des Systems relevant sind, zeitlich fortlaufend mittels Sensoren gemessen. Beispielsweise werden Messungen von Motorstrom, Motortemperatur, Bodendruck und Kopfdruck bei Pumpen durchgeführt. Weitere technische Systeme können Maschinen, wie beispielsweise Turbinen, Motoren jeglicher Art, aber auch Geräte in industriellen Anlagen wie Feldgeräte und dergleichen sein. Basierend auf solchen Sensordaten ist es möglich, Anomalien des technischen Systems frühzeitig zu erkennen und dadurch hohe Kosteneinsparungen zu erzielen. Durch eine kontinuierliche Anomaliedetektion kann ein Fehlfunktion des Systems frühzeitig erkannt und rechtzeitig repariert werden, sodass ein kompletter Ausfall vermieden werden kann.

Kennzeichnend für solche Überwachungsszenarien ist, dass die aufgenommenen Daten zeitabhängig sind und dynamisch, das heißt in regelmäßigen oder unregelmäßigen zeitlichen Abständen gemessen und analysiert werden. Eine Einordnung eines solchen Datenpunktes als normal oder anormal, das heißt entspricht der Datenpunkt einem System im Normalzustand oder deutet der Wert des Datenpunktes auf einen anormalen Zustand, insbesondere einen Fehlerzustand des Systems hin, soll in einem Überwachungssystem zeitnah, möglichst sogar in Echtzeit ermittelt werden.

Häufig werden mehr als ein Parameter gleichzeitig überwacht, sodass ein Sensordatenpunkt aus einer Mehrzahl von Einzelwerten zu verschiedenen gemessenen Parametern des Systems umfasst. Auf künstliche Intelligenzmethoden (KI) basierende Verfahren können solche Zeitreihen von Sensordaten, die beispielsweise auch an unterschiedlichen Komponenten des Systems zur vorgegebenen Zeit gemessen werden, analysieren und Maßnahmen einleiten, um den Grund für das anormale Verhalten zu finden.

Es ist bekannt, Verfahren der künstlichen Intelligenz wie beispielsweise Klassifikations- oder Clustering-Verfahren zur Anomaliedetektion einzusetzen.
Es sind unterschiedliche Methoden für eine KI-basierte Anomaliedetektion bekannt. Unterschieden werden dabei unter anderem Verfahren, die eine Zeitabhängigkeit in den Daten berücksichtigen und solche, bei denen dies nicht der Fall ist. Beispiele für Methoden, die eine Zeitabhängigkeit in den Daten berücksichtigen, sind Vorhersagemodelle, die auf Daten der Vergangenheit trainiert sind und basierend darauf einen nächsten Wert vorhersagen. Weicht diese Vorhersage stark von dem beobachteten Wert ab, so ist davon auszugehen, dass eine Anomalie vorliegt.

Zu den Verfahren, die keinen Zeitbezug berücksichtigen, gehören beispielsweise Clustering-Verfahren, die in der Lage sind, Ausreißer, auch als Outlier bezeichnet, als solche zu erkennen und als solche zu kennzeichnen. Ein Vorteil dieser Clustering-Verfahren ist es, unterschiedliche Arten von Normalzuständen in den Daten modulieren zu können. Diese werden dann als unterschiedliche Cluster repräsentiert. Ein Vorhersagemodell könnte unterschiedliche Arten von Normalzuständen nur modellieren, wenn vorab bekannt ist, welche Arten von Normalzuständen es gibt. Dann müsste beispielsweise für jeden Normalzustand ein eigenes Modell trainiert werden.

So ist für die Überwachung von technischen Systemen, bei denen mehrere Normalzustände vorliegen können, ein Clustering-Verfahren günstig zu verwenden. Dies hat jedoch den Nachteil, dass diese keine Zeitabhängigkeit berücksichtigen. Für jeden neu hinzukommenden Datenpunkt muss das gesamte Modell mit allen Datenpunkten einschließlich dem neuen Datenpunkt berechnet und überprüft werden, ob der neue Datenpunkt als Ausreißer identifiziert wird oder nicht. Eine Einordnung eines oder mehrerer Datenpunkte als normal oder anormal, wird im weiteren als Anomaliedetektion bezeichnet.

Es ist somit Aufgabe der vorliegenden Erfindung ein KIbasiertes Anomaliedetektionsverfahren zu schaffen, das mehrere Normalzustände modellieren kann und in zeitlichen Abständen neu hinzukommende Sensordatenpunkte schnell als zu einem Normalzustand gehörend oder eben auf einen anormalen Zustand hinweisend einordnen zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft eine Überwachungsvorrichtung zur Anomaliedetektion anhand von zeitlich fortlaufend ermittelten Sensordaten eines technischen Systems, umfassend eine Eingabeschnittstelle, die derart ausgebildet ist, einen neuen Sensordatenpunkt des technischen Systems zu empfangen, eine Analyseeinheit, die derart ausgebildet ist,

- für den neuen Sensordatenpunkt eine minimale Erreichbarkeitsdistanz gegenüber einer Auswahl von benachbarten Trainingsdatenpunkten zu ermitteln und
- für den neuen Sensordatenpunkt eine minimale Position in der Abfolge der Trainingsdatenpunkte in einem Erreichbarkeitsdiagramm, das mittels einer dichtebasierten Clustering-Funktion mit vorbestimmten Trainingsdatenpunkten als Eingabewerte erstellt wurde und in dem die Abfolge der Trainingsdatenpunkte aufsteigend nach einer Bearbeitungsreihenfolge der Trainingsdatenpunkte geordnet und in dem für jeden Trainingsdatenpunkt die Erreichbarkeitsdistanz angegeben ist, zu ermitteln,

- den neuen Sensordatenpunkt im Erreichbarkeitsdiagramm nach dem Trainingsdatenpunkt mit der minimalen Position und vor dem Trainingsdatenpunkt, der eine größere Erreichbarkeitsdistanz als die ermittelte minimale Erreichbarkeitsdistanz aufweist, einzufügen,
- den neuen Sensordatenpunkt abhängig von seiner Position im ergänzten Erreichbarkeitsdiagramm einem bestimmten Cluster zuzuordnen und abhängig von der minimalen Erreichbarkeitsdistanz einen Status als normal oder anormal zuzuordnen, und
- eine Ausgabeschnittstelle, die derart ausgebildet ist, den zugeordneten Status und/oder das zugeordnete Cluster als Ergebnis der Anomaliedetektion auszugeben.

Die dichtebasierte Clustering-Funktion der Analyseeinheit hat den Vorteil, mit dynamischen Sensordatenpunkten, die nicht von Anfang an zur Auswertung durch die dichtebasierte Clustering-Funktion vorliegen, sondern nach und nach weitere hinzukommen, zu funktionieren. Eine Analyse, ob der neue Sensordatenpunkt ein Ausreißer ist und damit auf einen anormalen Zustand des überwachten technischen Systems hinweist, kann somit mit geringerem Rechenaufwand und damit auch schneller ermittelt werden. Insbesondere die Zuordnung des Clusters und des Status des neuen Sensordatenpunktes anhand der Position des neuen Sensordatenpunktes im ergänzten Ereignisdiagramm erlaubt eine sehr schnell erste Einschätzung und Anomaliedetektion. Trainingsdatenpunkte sind Sensordatenpunkte, die einen Normalzustand des technischen Systems charakterisieren. Trainingsdaten können an dem zu überwachenden technischen System oder einem diesem ähnlichen technischen System gemessen worden sein. Trainingsdaten können aber auch künstlich erzeugt worden sein.

In einer vorteilhaften Ausführungsform ist die dichtebasierte Clustering-Funktion ein "Punkteordnen, um die Clusterstruktur zu identifizieren"-Verfahren, abgekürzt OPTICS-Verfahren. Damit kann ein bereits bekanntes Clustering-Verfahren als Grundlage verwendet werden und lediglich Anpassungen zu diesem OPTICS-Verfahren sind notwendig.

In einer vorteilhaften Ausführungsform ist die Überwachungsvorrichtung derart ausgebildet, die dichtebasierte Clustering-Funktion auf das um den neuen Sensordatenpunkt ergänzte Erreichbarkeitsdiagramm anzuwenden und dem neuen Sensordatenpunkt das daraus für ihn ermittelte Cluster zuzuordnen.

Durch das ergänzte Erreichbarkeitsdiagramm sind der dichtebasierten Clustering-Funktion bereits eine Ausgangsreihenfolge für die Bearbeitung der Trainingsdatenpunkte und des neuen Sensordatenpunktes vorgegeben. Dadurch verringern sich die Anzahl der durchzuführenden Bearbeitungsschritte und damit auch die Bearbeitungsdauer durch die dichtebasierte Clustering-Funktion. Durch die Anwendung der dichtebasierten Clustering-Funktion wird die Wahrscheinlichkeit für eine korrekte Zuordnung zu einem Cluster größer und somit verlässlicher.

In einer vorteilhaften Ausführungsform enthält die Auswahl der benachbarten Trainingsdatenpunkte alle Trainingsdatenpunkte, die einen vorgegebenen Abstand, beispielsweise den Wert $\varepsilon\_max$, vom neuen Sensordatenpunkt aufweisen. Durch den vorgegebenen Abstand $\varepsilon\_max$ wird die Anzahl der zu betrachtenden benachbarten Trainingsdatenpunkte bestimmt und kann somit bei einem kleinen $\varepsilon\_max$-Wert auf wenige Trainingsdatenpunkte eingeschränkt bzw. bei einem großen vorgegebenen Abstand $\varepsilon\_max$ auf eine größere Anzahl benachbarter Trainingsdatenpunkte gesetzt werden. Somit kann die Analyse flexibel auf die Dichte der Datenpunkte eingestellt werden. Dadurch werden wiederum die Abarbeitungszeit bzw. die Dauer der Analyse bestimmt und ist somit flexibel einstellbar.

In einer vorteilhaften Ausführungsform ist die Überwachungsvorrichtung derart ausgebildet, dem neuen Sensordatenpunkt die Kerndistanz mit dem Wert unendlich zuzuordnen, wenn die Anzahl von benachbarten Trainingsdatenpunkten geringer als eine vorgegebene Anzahl ist.

Dadurch kann sichergestellt werden, dass auch ein von den anderen Trainingsdatenpunkten weit entfernter neuer Sensordatenpunkt ebenfalls berücksichtigt wird. Wie für einen ersten Datenpunkt bei einem eigentlichen Durchlauf des dichtebasierten Clusterverfahrens wird für diesen Punkt dann eine Kerndistanz angenommen. Daraus kann wiederum eine Erreichbarkeitsdistanz ermittelt werden.

In einer vorteilhaften Ausführungsform ist die Überwachungsvorrichtung derart ausgebildet, für jeden Trainingsdatenpunkt in der Auswahl der Trainingsdatenpunkte eine Erreichbarkeitsdistanz zum neuen Sensordatenpunkt zu ermitteln und die niedrigste der ermittelten Erreichbarkeitsdistanzen dem neuen Sensordatenpunkt als minimale Erreichbarkeitsdistanz zuzuordnen. Somit kann mit wenig Rechenaufwand für den neuen Sensordatenpunkt eine Zuordnung des Status als Ausreißer und somit anormal, oder als normal abgeschätzt werden.

In einer vorteilhaften Ausführungsform ist die Überwachungsvorrichtung derart ausgebildet, die Position des Trainingsdatenpunktes aus der Auswahl der Trainingsdatenpunkte, der die niedrigste ermittelte Erreichbarkeitsdistanz aufweist, im Erreichbarkeitsdiagramm als Vorgängerposition zu ermitteln und die darauf folgende Position als minimale Position für den neuen Sensordatenpunkt zu ermitteln. Somit kann die Position des neuen Sensordatenpunktes im Erreichbarkeitsdiagramm ermittelt und der neue Sensordatenpunkt einem Cluster zugeordnet werden.

In einer vorteilhaften Ausführungsform ist die Überwachungsvorrichtung derart ausgebildet, den neuen Sensordatenpunkt am Ende des Erreichbarkeitsdiagramms einzufügen, wenn die Erreichbarkeitsdistanz eines jeden Trainingspunktes, der in der Abfolge nach der Vorgängerposition angeordnet ist, kleiner als die minimale Erreichbarkeitsdistanz des neuen Sensordatenpunktes ist.

In einer vorteilhaften Ausführungsform ist die Überwachungsvorrichtung derart ausgebildet, für alle neuen Sensordatenpunkte, die in einem Zeitfenster mit vorgegebener Dauer empfangen werden, oder für eine vorgegebene Mindestanzahl von zeitlich aufeinanderfolgenden neuen Sensordatenpunkten, die in der Analyseeinheit ausgeführten Schritte durchzuführen und nur dann als anormal auszugeben, wenn die ermittelten Zuordnungen einer vorgegebenen Regel entsprechen.

Dies ermöglicht es einen zeitlichen Verlauf bei der Bewertung einer Anomalie mit einzubeziehen und so einen einzelnen Ausreißer bei ansonsten weiteren als normal eingeordneten Sensordatenpunkten zu identifizieren.

In einer vorteilhaften Ausführungsform ist die Regel eine minimale Anzahl von als normal detektierten neuen Sensordatenpunkten.

In einer vorteilhaften Ausführungsform ist eine Regel eine ansteigende Anzahl von als anormal detektierten neuen Sensordatenpunkten in aufeinander erfolgten Zeitfenstern.

In einer vorteilhaften Ausführungsform weist die Überwachungsvorrichtung eine Nutzerschnittstelle auf, die derart ausgebildet ist, die Dauer des Zeitfensters, die Mindestanzahl von neuen Sensordatenpunkten oder die Art der Regel zu empfangen. Dies ermöglicht eine flexible Anpassung der Analyseeinheit für die Auswertung und Anomaliedetektion der neuen Sensordatenpunkte. Auch können weitere Parameter der Clustering-Funktion von einem Experten über die Nutzerschnittstelle eingegeben werden.

In einer vorteilhaften Ausführungsform ist ein technisches System ein oder mehrere Maschinen einer Energieverteilungs-, einer Energieerzeugungs- oder Energieförderungsanlage oder ein oder mehrere Geräte einer Automatisierungsanlage.

Ein zweiter Aspekt der Erfindung betrifft ein Verfahren zur Anomaliedetektion anhand von zeitlich fortlaufend ermittelten Sensordaten eines technischen Systems, umfassend die Schritte

- Empfangen eines neuen Sensordatenpunktes des technischen Systems,
- für den neuen Sensordatenpunkt, Ermitteln einer minimalen Erreichbarkeitsdistanz gegenüber einer Auswahl von benachbarten Trainingsdatenpunkten und
- für den neuen Sensordatenpunkt, Ermitteln einer minimalen Position in der Abfolge der Trainingsdatenpunkte in einem Erreichbarkeitsdiagramm, das mittels einer dichtebasierten Clustering-Funktion mit vorbestimmten Trainingsdatenpunkten als Eingabewert erstellt wurde und die Abfolge der Trainingsdatenpunkte aufsteigend nach einer Bearbeitungsreihenfolge der Trainingsdatenpunkte geordnet und in dem für jeden Trainingsdatenpunkt die Erreichbarkeitsdistanz angegeben ist,
- Einfügen des neuen Sensordatenpunktes im Erreichbarkeitsdiagramm nach dem Trainingsdatenpunkt mit der minimalen Position und vor dem Trainingsdatenpunkt, der eine größere Erreichbarkeitsdistanz als die ermittelte minimale Erreichbarkeitsdistanz aufweist,
- dem neuen Sensordatenpunkt, Zuordnen eines bestimmten Clusters abhängig von seiner Position als Diagramm und Zuordnen eines Status als normal oder anormal abhängig von der minimalen Erreichbarkeitsdistanz, und
- Ausgeben des zugeordneten Status und/oder des zugeordneten Clusters als Ergebnis der Anomaliedetektion.

Durch das Verfahren können neue Sensordatenpunkte, die in einer zeitlichen Abfolge am zu überwachenden technischen System gemessen wurden, sehr schnell bewertet werden. Dabei kann nicht nur bewertet werden, ob der neue Sensordatenpunkt auf einen normalen oder anormalen Zustand des technischen Systems hinweist, sondern auch das Cluster, das beispielsweise einem Arbeitsmodus des technischen Systems entspricht, zugeordnet werden. Somit können die Eigenschaften einer dichtebasierten Clustering-Funktion, nämlich einem Punkt ein bestimmtes Cluster zuzuordnen oder diesen als Ausreißer zu identifizieren, auf neue in zeitlicher Folge hinzukommende neue Sensordatenpunkte erweitert werden. Dabei wird jeder Datenpunkt zunächst separat und ohne zeitliche Abhängigkeiten betrachtet. Die Entscheidung, ob es sich um eine Anomalie handelt oder um eine zufällige Varianz wird bevorzugt in einem nachfolgenden Schritt unter Berücksichtigung beispielsweise einer vorgegebenen Mindestanzahl von neuen Sensordatenpunkten getroffen.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die dazu geeignet sind, die Schritte des Verfahrens durchzuführen.

Sofern es in der nachfolgenden Beschreibung nicht anders angegeben ist, beziehen sich die Begriffe "ermitteln", "einfügen", "ausgeben" und dergleichen, vorzugsweise auf Handlungen und/oder Prozesse und/oder Verarbeitungsschritte, die Daten verändern und/oder erzeugen und Daten in andere Daten überführen, wobei die Daten insbesondere als physikalische Größen dargestellt werden oder vorliegen können, beispielsweise als elektrische Impulse. Unter einer Überwachungsvorrichtung kann im Zusammenhang mit der Erfindung beispielsweise ein oder mehrere Prozessoren und/oder eine Speichereinheit zum Speichern von Programmbefehlen verstanden werden. Die Vorrichtung kann als eine eigenständige Vorrichtung oder Teil einer Vorrichtung sein.

Die jeweilige "Einheit", z. B. die Analyseeinheit kann hardwaretechnisch und/oder auch softwaretechnisch implementiert sein. Bei einer hardwaretechnischen Implementierung kann die jeweilige Einheit als Vorrichtung oder als Teil einer Vorrichtung z. B. als Computer oder als Mikroprozessor oder als Steuerrechner ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Die für die vorgeschlagene Überwachungsvorrichtung beschriebenen Ausführungsformen und Merkmale gelten für das vorgeschlagene Verfahren entsprechend.

Ausführungsbeispiele der erfindungsgemäßen Überwachungsvorrichtung und des erfindungsgemäßen Verfahrens sind in den Zeichnungen beispielhaft dargestellt und werden anhand der nachfolgenden Beschreibung näher erläutert. Es zeigen

Fig. 1     eine Ausführungsform der erfindungsgemäßen Überwachungsvorrichtung in Blockdarstellung;

Fig. 2     eine schematische Darstellung der herkömmlichen Ermittlung einer Kern- und Erreichbarkeitsdistanz gemäß der dichtebasierten Clustering-Funktion;

Fig. 3     eine schematische Darstellung von Trainingsdatenpunkten und einem daraus ermittelten Erreichbarkeitsdiagramm;

Fig. 4     eine schematische Darstellung einzelner Verfahrensschritte des erfindungsgemäßen Verfahrens;

Fig. 5     eine schematische Darstellung des erfindungsgemäßen Verfahrens zur Ermittlung der minimalen Position für einen neuen Sensordatenpunkt in einem Erreichbarkeitsdiagramm; und

Fig. 6     ein Ausführungsbeispiel des erfindungsgemäßen Verfahrens in Form eines Flussdiagramms.

Einander entsprechend Teile sind in allen Figuren mit den gleichen Bezugszeichen versehen.

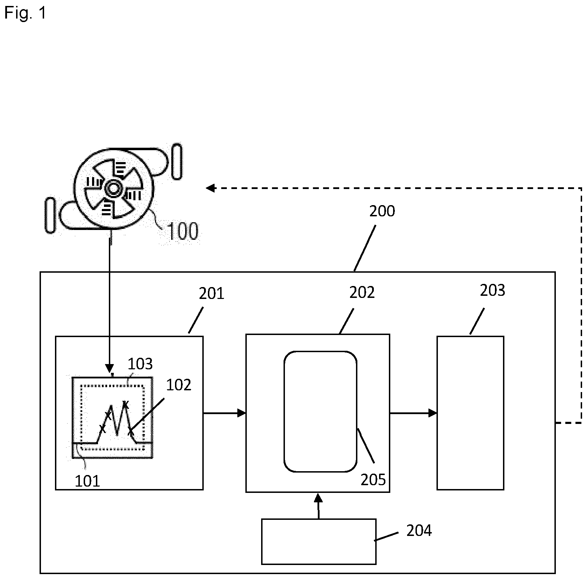

In Figur 1 ist ein technisches System 100 und eine Überwachungsvorrichtung 200 dargestellt. Das technische System 100 kann beispielsweise eine oder mehrere Maschinen in einer Energieverteilungs-, einer Energieerzeugungs- oder Energieförderungsanlage oder Geräte einer Automatisierungsanlage sein. Über Sensoren werden fortlaufend Parameter des technischen Systems 100 gemessen und ein oder mehrere dieser Parameterwerte als Sensordatenpunkt 102 einer Überwachungsvorrichtung 200 bereitgestellt.

Die Überwachungsvorrichtung 200 umfasst eine Eingabeschnittstelle 201, die einen oder mehrere Sensordatenpunkte 102 vom technischen System 100 empfängt. Es können Sensordatenpunkte fortlaufend in kurzen zeitlichen Abständen, siehe beispielsweise eine kontinuierliche Sensordatenpunktfolge 101, empfangen werden, oder einzelne Datenpunkte, siehe Sensordatenpunkt 102 in größeren zeitlichen Abständen empfangen werden.

Die Überwachungsvorrichtung 200 umfasst des Weiteren eine Analyseeinheit 202, die eine dichtebasierte Clustering-Funktion 205 mit dem Sensordatenpunkt als Eingabewert ausführt. Dabei wird der neue Sensordatenpunkt 102 anhand eines Clustering-Modells einem Status als normal oder anormal zugeordnet, wobei der Status des Sensordatenpunktes 102 den Zustand des technischen Systems 100 zu der Zeit, zu der der Sensordatenpunkt 102 aufgenommen wurde, darstellt. Die dichtebasierte Clustering-Funktion 205 kann den Sensordatenpunkt 102 unterschiedlichen Clustern zuordnen, wobei jedes Cluster einem unterschiedlicher Betriebszustand des technischen Systems 100 zugeordnet ist, bzw. entspricht. Die Zuordnung eines Clusters zu einem Betriebsmodus, sowie die Angabe eines Status als normal oder anormal für den betrachteten Sensordatenpunkt wird von die Analyseeinheit 202 als Ergebnis der Anomaliedetektion an eine Ausgabeschnittstelle 203 ausgegeben. Basierend auf dem Ergebnis der Anomalieerkennung kann beispielsweise eine Alarmfunktion ausgelöst werden.

Da einzelne Sensordatenpunkte als Ausreißer, die ein anormales Verhalten des technischen Systems kennzeichnen, ermittelt werden können, ohne dass tatsächlich eine Anomalie vorliegt, werden bevorzugt zusätzlich weitere neue Sensordatenpunkte analysiert und nur wenn innerhalb eines betrachteten Zeitfensters, siehe die Daten im Zeitfenster 103 der Eingangsschnittstelle 201, die Ergebnisse der Anomalieerkennung einer vorgegebenen Regel entsprechen, wird der Sensordatenpunkt als anormal ausgegeben. Alternativ kann statt einem Zeitfenster mit vorgegebener Dauer eine vorgegebene Mindestanzahl von zeitlich aufeinanderfolgenden neuen Sensordaten analysiert und eine Anomaliedetektion durchgeführt werden. Lediglich, wenn die Ergebnisse dieser Anomaliedetektion einer vorgegebenen Regel entsprechen, wird der Sensordatenpunkt 102 als anormal ausgegeben.

Eine Regel ist dabei beispielsweise, dass eine minimale Anzahl von betrachteten neuen Sensordatenpunkten 102 als anormal detektiert wurden. Eine Regel ist beispielsweise, dass die Anzahl von als anormal detektierten neuen Sensorpunkten 102 in aufeinander folgenden Zeitfenstern 103 ansteigt. Sowohl die Zeitdauer des Zeitfensters als auch eine minimale Anzahl von als anormal zugeordneten Datenpunkten, die zur Ausgabe einer Anomalie benötigt werden, sowie die Art der anzuwendenden Regel ist mittels der Nutzerschnittstelle 204 eingebbar. Eine konkrete Regel kann beispielsweise sein, dass die Anzahl der als Ausreißer gekennzeichneten neuen Sensordatenpunkte, die aufeinanderfolgenden Zeitfenstern, wobei in jedem Zeitfenster eine Mindestanzahl von zehn neuen Sensordatenpunkten enthalten sind, im Lauf der Zeit ansteigt. Die Regeln können dem Verhalten der neuen Sensordatenpunkte und somit dem Zustand des technischen Systems 100 angepasst werden. Diese Eingaben werden bevorzugt von einem Domänenexperten festgelegt.

Zum Erkennen von mehreren Arten von Normalzuständen und einem entsprechenden Zuordnen von Sensordatenpunkte unterschiedlichen Clustern, eigenen sich insbesondere dichtebasierte Clustering-Verfahren. Am Beispiel eines "Punkteordnen, um die Clusterstruktur zu identifizieren" Verfahren, das abgekürzt als OPTICS-Verfahren bezeichnet wird, wird nachfolgend beschrieben, wie dieses Verfahren genutzt und modifiziert wird um eine Anomaliedetektion zeitnah für neue Sensordatenpunkte 102 durchführt werden kann.

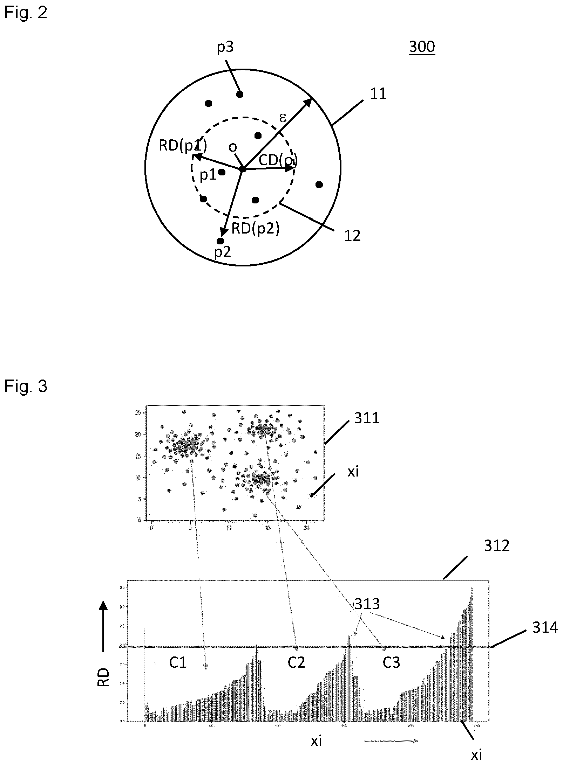

Das Ergebnis des OPTICS-Verfahrens wird als Erreichbarkeitsdiagramm 312, siehe Figur 3, visualisiert. Hierbei wird an der y-Achse die Erreichbarkeitsdistanz RD angetragen. Die Datenpunkte xi werden entlang der x-Achse nach der von OPTICS berechneten Ordnung sortiert aufgetragen. "Täler" im Erreichbarkeitsdiagramm 312 entsprechen erkannten Clustern C1, C2, C3 im Datensatz 311, die Tiefe des Tales zeigt die Dichte des Clusters an, siehe Figur 3.

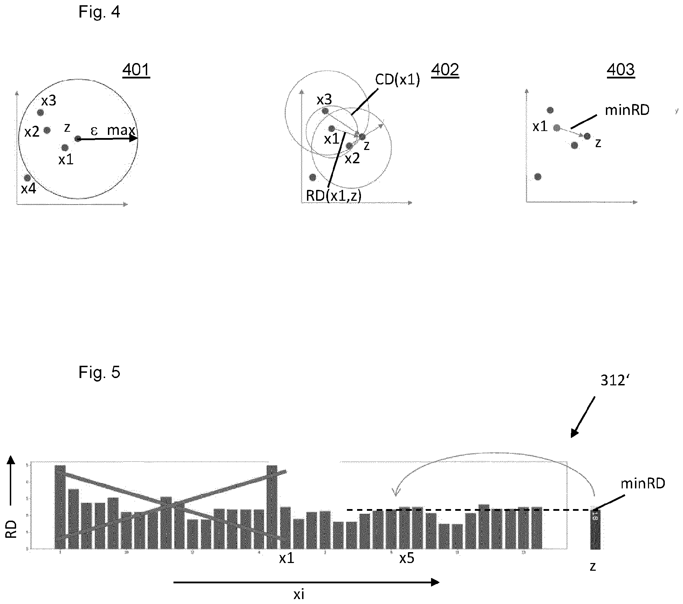

Anhand von Figuren 2 und 3 wird nun die Ermittlung eines solchen Erreichbarkeitsdiagramms in einem eigentlichen Durchlauf des OPTICS-Verfahrens beschrieben. Basierend darauf wird in den Figuren 4 und 5 die erfindungsgemäße Erweiterung des Verfahrens beschrieben.

Für jeden Datenpunkt werden zwei Maße, eine Kerndistanz CD und eine Erreichbarkeitsdistanz RD berechnet, die für das Clustering-Verfahren eine entscheidende Rolle spielen. In Figur 2 ist dies für einen Datenpunkt o dargestellt. Das OPTICS-Clustering-Verfahren hat dabei drei Parameter. Zum einen eine maximale $\varepsilon$-Distanz $\varepsilon\_max$. Sie legt den Radius um den Punkt o fest, der bei der Bearbeitung betrachtet wird. Der zweite Parameter ist eine minimale Anzahl MinPts von Punkten. Damit ist definiert, wie viele Punkte $N_\varepsilon(o)$ sich mindestens innerhalb des $\varepsilon\_max$-Radius befinden müssen, damit der Punkt o als Kernpunkt gilt. Außerdem ist der Parameter $\varepsilon\_max$ entscheidend für die Bestimmung der Kerndistanz des Punktes o. Ein dritter Parameter ist der $\varepsilon$-Wert, für den das Clustering erstellt wird. Dieser Wert kann nach Berechnung der Clusterstruktur noch variiert werden und somit können ohne größeren Rechenaufwand unterschiedlich dichte Clusterings extrahiert werden.

Die Kerndistanz ist allgemein definiert durch

$$CD_{\varepsilon,MinPts}(o) = \begin{cases} UNDEFINED, if \, |N_\varepsilon(o)| < MinPts \\ MinPtsDistance(o), else \end{cases} \quad (1).$$

Die Erreichbarkeitsdistanz ist allgemein definiert durch

$$RD(p,o) = \begin{cases} Undefined, if \, |N_{\varepsilon\_max}(o)| < MinPts \\ max\{core - dist(o), dist(o,p)\}, else \end{cases} \quad (2)$$

Der eigentliche Durchlauf des OPTICS-Clustering-Verfahrens läuft wie folgt ab:
Zunächst wird ein beliebiger Datenpunkt, beispielsweise der Punkt xi in Figur 3, ausgewählt. Dieser hat per Definition die Erreichbarkeitsdistanz "unendlich", da die Erreichbarkeitsdistanz RD immer über einen vorher bearbeiteten Punkt definiert werden muss und es in diesem Fall keine Vorgänger gibt. Die Kerndistanz CD(o) des Punktes o kann jedoch bestimmt werden.

Alle Datenpunkte, die sich im $\varepsilon\_max$-Radius um den Punkt o befinden, werden außerdem in eine Liste eingefügt. Sie erhalten zunächst temporär eine Erreichbarkeitsdistanz RD, wie sie sich über den aktuell betrachteten Punkt o definieren lässt. Die Liste wird anschließend nach der Erreichbarkeitsdistanz RD der Punkte sortiert. Anschließend wird derjenige Punkt, der die geringste Erreichbarkeitsdistanz aufweist, der Liste entnommen und als nächstes ebenso bearbeitet. Auch seine sich im $\varepsilon\_max$-Radius befindlichen Punkte werden der Liste mit einer Erreichbarkeitsdistanz vom aktuellen Punkt zugefügt. Sollte sich ein Punkt bereits in der Liste befinden, so wird gegebenenfalls dessen Erreichbarkeitsdistanz RD aktualisiert, sofern sie dadurch kleiner werden würde. Nach diesem Schema wird solange weiterverfahren, bis die Liste leer ist. Sofern dann noch nicht alle Punkte verarbeitet sind, wird zufällig ein beliebiger, noch nicht verarbeiteter Punkt gewählt. Anschließend können die Erreichbarkeitsdistanzen RD in einem Erreichbarkeitsdiagramm, siehe Erreichbarkeitsdiagramm 312 in Figur 3, eingetragen werden. Dabei sind die Punkte in der Reihenfolge ihrer Bearbeitung in x-Richtung angeordnet. In y-Richtung ist jeweils die Erreichbarkeitsdistanz RD des Punktes eingetragen. Beispielhaft ist der Punkt xi aus der Menge der Datenpunkten 311 im Erreichbarkeitsdiagramm 312 mit xi bezeichnet eingetragen.

Das Erreichbarkeitsdiagramm 312 ist eine Visualisierung der ermittelten Clusterhierarchie. Das Erreichbarkeitsdiagramm erleichtert auch die Einstellung des ε-Parameters, der für die Extraktion der Cluster und die Definition von Ausreißern, die in Figur 3 mit dem Referenzzeichen 313 gekennzeichnet sind, benötigt wird. Zu beachten ist hierbei, dass bei der Extraktion der Cluster C1, C2, C3 zusätzlich auch die Kerndistanz der Punkte berücksichtigt wird. Die rote Linie im Erreichbarkeitsdiagramm 312 kann somit eine intuitive Vorstellung davon geben, welche Cluster C1, C2, C3 entstehen. Es muss aber davon ausgegangen werden, dass einzelne Punkte, deren Erreichbarkeitsdistanz RD größer als der ε-Wert ist, dennoch aufgrund ihrer geringen Kerndistanz einem Cluster C1, C2, C3 zugeordnet werden.

Für das technische System 100 ist basierend auf einer Vielzahl von Trainingsdaten, beispielsweise den Datenpunkten 311 in Figur 3, durch das dichtebasierte Clustering-Verfahren, wie eben für das OPTICS-Verfahren beschrieben, das Erreichbarkeitsdiagramm 312 trainiert worden. Der eingezeichnete ε-Wert 314 gibt dabei eine maximale Erreichbarkeitsdistanz an. Ist die für einen Datenpunkt ermittelte Erreichbarkeitsdistanz RD größer als dieser Maximalwert 314, so wird der Datenpunkt als Ausreißer 313 gekennzeichnet und dem Zustand anormal zugeordnet. Jeder von der Eingabeschnittstelle 201 der Überwachungsvorrichtung 200 empfangene neue Sensordatenpunkt z soll nun von der Analyseeinheit 202 bzw. dichtebasierten Clustering-Funktion 205 entweder einem der bestehenden Cluster C1, C2, C3, die durch die Trainingsdatenpunkte xi ermittelt wurden, zugeordnet werden, oder als Ausreißer gekennzeichnet werden.

Hierfür ist es erforderlich, diesen neuen Sensordatenpunkt z an der richtigen Position des Erreichbarkeitsdiagramms 312 einzufügen. Dazu könnte das dichtebasierte Clustering-Verfahren, insbesondere das OPTICS-Verfahren auf alle bisher schon verwendeten Punkten, also auf die Trainingsdatenpunkte und zusätzlich dem hinzugekommenen neuen Sensordatenpunkt z angewandt werden. Ein solcher Ansatz hat jedoch den Nachteil, dass dieser schlecht skaliert, da für jeden neuen Sensordatenpunkt z das gesamte dichtebasierte Clustering-Verfahren neu durchlaufen werden muss. Des Weiteren kann es zu unnatürlich großen Erreichbarkeitsdistanzen RD kommen, wenn der neue Sensordatenpunkt z im Laufe des Verfahrens zufällig gewählt wird, um ein neues Cluster zu eröffnen. Des Weiteren sind dichtebasierte Clustering-Verfahren wie insbesondere OPTICS reihenfolgeabhängig und garantieren daher nicht, dass die Erreichbarkeitsdistanz RD für einen Punkt optimal ist.

Aus diesem Grund wird nun ein neuer Sensordatenpunkt z wie nachfolgend anhand von Figur 4 beschrieben hinzugefügt. Figur 4 zeigt einen neuen Sensordatenpunkt z im Diagramm 401. Zunächst werden alle Punkte x1, x2, x3 bestimmt, die sich in einem ε_max-Radius um den neuen Sensordatenpunkt z befinden. Es wird ermittelt, wie viele Punkte das sind. In dem im Diagramm 401 dargestellten Fall sind dies die Punkte x1, x2, x3. Sofern es mehr als eine vorgegebene Anzahl MinPts von Punkten sind, ist der neue Sensordatenpunkt z ein Kernpunkt und seine Kerndistanz CD(z) wird entsprechend dem vorbeschriebenen Verfahren bestimmt. Wenn dies nicht der Fall ist, wird seine Kerndistanz CD(z) auf unendlich gesetzt.

Anschließend wird für jeden Punkt im ε_max-Radius, das heißt von jedem der Punkte x1, x2, x3 ausgehend jeweils die Erreichbarkeitsdistanz RD(x1,z), RD(x2,z), RD(x3,z) zum neuen Sensordatenpunkt z ermittelt. Dies ist im Diagramm 402 dargestellt. Dazu wird um jeden der Trainingsdatenpunkte x1, x2, x3 seine Kerndistanz CD(x1), CD(x2), CD(x3) dargestellt und die Erreichbarkeitsdistanz zwischen x1 und z bzw. x2 und z bzw. x3 und z entsprechend der Definition (2) ermittelt. Dann wird aus dieser Menge der Trainingspunkte x1, x2, x3 derjenige Punkt bestimmt, der dem neuen Sensordatenpunkt z die geringste Erreichbarkeitsdistanz minRD liefert. Diese wird als minimale Erreichbarkeitsdistanz minRD für den neuen Sensordatenpunkt z vermerkt. Der Trainingsdatenpunkt x1, über den die minimale Erreichbarkeitsdistanz definiert wurde, wird als Vorgänger oder auch als minimale Position markiert.

Anschließend wird der neue Sensordatenpunkt z an der entsprechenden Stelle des Erreichbarkeitsdiagramms eingefügt. Ein vergrößerter Ausschnitt 322 des Erreichbarkeitsdiagramms 312, das für die Trainingsdatenpunkte des technischen Systems erstellt wurde, dargestellt.

Der neue Sensordatenpunkt z ist rechts vom Erreichbarkeitsdiagramm 322 als Balken mit einer Höhe entsprechend seiner ermittelten minimalen Erreichbarkeitsdistanz minRD dargestellt.

Ist der neue Sensordatenpunkt z von keinem anderen Trainingsdatenpunkt erreichbar, so wird er am Ende des Erreichbarkeitsdiagramms 312 eingefügt. Ansonsten wird die minimale Position, das heißt die Position seines Vorgängers, bestimmt. Dieser Vorgänger, im Diagramm 322 der Trainingsdatenpunkt x1, und alle Trainingsdatenpunkte, die vor ihm verarbeitet wurden, also alle in der Abfolge links von xi dargestellten Trainingsdatenpunkte werden verworfen. Der neue Sensordatenpunkt muss per Definition später eingefügt werden. Für alle verbleibenden Trainingsdatenpunkte im Erreichbarkeitsdiagramm 322 bzw. 312 wird kontrolliert, ob deren Erreichbarkeitsdistanz RD größer als die minimale Erreichbarkeitsdistanz minRD des neuen Sensordatenpunktes z ist. Sobald dies bei einem Trainingsdatenpunkt der Fall ist, wird der neue Sensordatenpunkt vor diesem Trainingsdatenpunkt eingefügt. Sollte dies bis zum Ende des Erreichbarkeitsdiagramms 312 nie der Fall sein, wird der neue Sensordatenpunkt am Ende eingefügt.

Der neue Sensordatenpunkt z kann nun abhängig von seiner Position im ergänzten Erreichbarkeitsdiagramm, das zusätzlich zu den Trainingsdatenpunkten nun den neuen Sensordatenpunkt enthält, einem bestimmten Cluster zugeordnet werden. Der neue Sensordatenpunkt wird damit immer demjenigen Cluster zugeordnet, zu dem auch der Vorgänger, also der Trainingsdatenpunkt mit der minimalen Position gehört. Dem neuen Sensordatenpunkt z wird abhängig von der minimalen Erreichbarkeitsdistanz minRD ein Status als normal oder anormal zugeordnet. Ist die minimale Erreichbarkeitsdistanz minRD des neuen Sensordatenpunkts z kleiner als die im Erreichbarkeitsdiagramm 312 eingezeichnete Grenzerreichbarkeitsdistanz 314 wird dem neuen Sensordatenpunkt z der Status normal zugeordnet, Ist seine minimale Erreichbarkeitsdistanz größer als die Grenzerreichbarkeitsdistanz 314, so wird ihm ein Status anormal zugeordnet.

Damit kann durch wenige Schritte dem neuen Sensordatenpunkt z ein Cluster sowie der Status zugeordnet werden. Für eine genauere Einordnung des neuen Sensordatenpunktes z zu einem Cluster bzw. als normal oder anormal kann das dichtebasierte Clustering-Verfahren für die Clusterextraktion mit der Reihenfolge der Datenpunkte und deren Erreichbarkeitsdistanzen entsprechend das neue Erreichbarkeitsdiagramm angewendet werden.

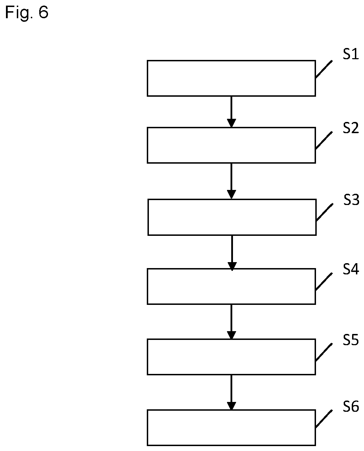

Anhand von Figur 6 wird zusammenfassend das erfindungsgemäße Verfahren anhand eines Ablaufdiagramms beschrieben. In einem ersten Verfahrensschritt S1 wird ein neuer Sensordatenpunkt des technischen Systems empfangen. Anschließend wird für den neuen Sensordatenpunkt eine minimale Erreichbarkeitsdistanz gegenüber einer Auswahl von benachbarten Trainingsdatenpunkten ermittelt, siehe Verfahrensschritt S2. Die Auswahl von Trainingsdatenpunkten entspricht den Trainingsdatenpunkten x1, x2, x3 im Diagramm 401. Anschließend wird im Verfahrensschritt S3 eine minimale die Position für den neuen Sensordatenpunkt in der Abfolge der Trainingsdatenpunkte im Erreichbarkeitsdiagramm 312 ermittelt. Wie anhand von Diagramm 402 und 403 dargestellt, wird zu jedem Trainingsdatenpunkt x1, x2, x3 der Auswahl von Trainingsdatenpunkten eine Erreichbarkeitsdistanz zum neuen Sensordatenpunkt ermittelt und die niedrigste der ermittelten Erreichbarkeitsdistanzen, siehe minRD im Diagramm 403 dem neuen Sensordatenpunkt z als minimale Erreichbarkeitsdistanz zugeordnet. Die Position des Trainingsdatenpunktes in der Auswahl der Trainingsdatenpunkte, der die niedrigste ermittelte Erreichbarkeitsdistanz aufweist, das heißt der Trainingsdatenpunkt x1 im Diagramm 403, wird als Vorgängerposition und somit als minimale Position ermittelt.

In Verfahrensschritt S4 wird nun der neue Sensordatenpunkt im Erreichbarkeitsdiagramm 312 nach der minimalen Position, hier also nach dem Trainingspunkt x1 und vor dem Trainingsdatenpunkt, der eine größere Erreichbarkeitsdistanz als die ermittelte minimale Erreichbarkeitsdistanz aufweist, eingefügt. In dem um den neuen Sensordatenpunkt ergänzten Erreichbarkeitsdiagramm 312' ist der Trainingsdatenpunkt x5 der Trainingsdatenpunkt, der eine größere Erreichbarkeitsdistanz als die ermittelte minimale Erreichbarkeitsdistanz minRD aufweist. Somit wird der neue Sensordatenpunkt z an der mit dem Pfeil dargestellten Position eingefügt.

Anschließend im Verfahrensschritt S5 wird dem neuen Sensordatenpunkt ein bestimmtes Cluster, abhängig von seiner Position im ergänzten Erreichbarkeitsdiagramm 312' und ein Status als normal oder anormal abhängig von der minimalen Erreichbarkeitsdistanz minRD gegenüber der Grenzerreichbarkeitsdistanz 314 zugeordnet. Im Verfahrensschritt S6 wird der zugeordnete Status und/oder das zugeordnete Cluster als Ergebnis der Anomaliedetektion ausgegeben. Wie bereits für die Überwachungsvorrichtung 200 beschrieben, kann der Status als normal oder anormal auch erst davon abhängig zugeordnet werden, wenn eine vorgegebene Anzahl von neuen Sensordatenpunkten oder eine Anzahl von neuen Sensordatenpunkten in einem Zeitfenster mit vorgegebener Dauer eine Anomaliedetektion nach dem beschriebenen Verfahren durchgeführt wird und das Ergebnis der Anomaliedetektion einer bestimmten Regel entspricht.

Das beschriebene Verfahren und die Überwachungsvorrichtung ermöglichen es auch dynamisch, das heißt in zeitlicher Abfolge, empfangene Sensordaten in kurzer Zeit bezüglich einem Betriebsmodus, der durch die Cluster repräsentiert wird, und im Status als normal oder anormal einzuordnen. Dem dichtebasierten Clusterverfahren müssen in diesem Fall nicht alle Datenpunkte von Anfang an vorliegen, sondern es können nach und nach weitere hinzukommen.

Das beschriebene Verfahren ist robuster als das herkömmliche dichtebasierte Clustering-Verfahren OPTICS in Bezug auf die Erreichbarkeitsdistanz. Das beschriebene Verfahren löst auch das Problem des herkömmlichen OPTICS-Verfahrens, bei dem bei einem neuen Sensordatenpunkt eine zu hohe Erreichbarkeitsdistanz zugewiesen wird. Dies kann auftreten, wenn ein Cluster komplett abgearbeitet ist und ein Sprung zu einem neuen Cluster erfolgen muss und dieser über den zu analysierenden neuen Sensordatenpunkt erfolgt. Dies kann auch der Fall sein, wenn die Parameter des dichtebasierten Clustering-Verfahrens nicht optimal eingestellt sind und der neu zu analysierende Sensordatenpunkt quasi eine Brücke zwischen zwei Clustern bildet und den nächst erreichbaren Punkt darstellt, während dies für das normale Clustering mit OPTICS kein großes Problem darstellt.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

**Patentansprüche**

1. Überwachungsvorrichtung zur Anomaliedetektion anhand von zeitlich fortlaufend ermittelten Sensordaten (102, z) eines technischen Systems (100), umfassend
   eine Eingabeschnittstelle (201), die derart ausgebildet ist,
   einen neuen Sensordatenpunkt (102, z) des technischen Systems (100) zu empfangen,
   eine Analyseeinheit, (202) die derart ausgebildet ist,

- für den neuen Sensordatenpunkt (102, z) eine minimale Erreichbarkeitsdistanz (minRD) gegenüber einer Auswahl von benachbarten Trainingsdatenpunkten (x1, x2, x3) zu ermitteln, und

- für den neuen Sensordatenpunkt (102, z) eine minimale Position (xi) in der Abfolge der Trainingsdatenpunkte in einem Erreichbarkeitsdiagramm (312), das mittels einer dichtebasierten Clustering-Funktion mit vorbestimmten Trainingsdatenpunkten als Eingabewerte erstellt wurde und in dem die Abfolge der Trainingsdatenpunkte aufsteigend nach einer Bearbeitungsreihenfolge der Trainingsdatenpunkte geordnet und in dem für jeden Trainingsdatenpunkt die Erreichbarkeitsdistanz (RD) angegeben ist, zu ermitteln,

- den neuen Sensordatenpunkt (102, z) im Erreichbarkeitsdiagramm nach der minimalen Position (xi) und vor dem Trainingsdatenpunkt, der eine größere Erreichbarkeitsdistanz als die ermittelte minimale Erreichbarkeitsdistanz (minRD) aufweist, einzufügen,

- den neuen Sensordatenpunkt (102, z) abhängig von seiner Position im ergänzten Erreichbarkeitsdiagramm (312') einem bestimmten Cluster zuzuordnen und abhängig von der minimalen Erreichbarkeitsdistanz (minRD) einen Status als normal oder anormal zuzuordnen, und

eine Ausgabeschnittstelle (203), die derart ausgebildet ist, die für den neuen Sensordatenpunkt (102, z) ermittelte Zuordnung als Ergebnis der Anomaliedetektion auszugeben.

2.  Überwachungsvorrichtung nach Anspruch 1, wobei die dichtebasierte Clustering-Funktion ein "Punkte ordnen, um die Clusterstruktur zu identifizieren"-Verfahren, abgekürzt OPTICS-Verfahren, ist.

3.  Überwachungsvorrichtung nach einem der vorangehenden Ansprüche, die derart ausgebildet ist, die dichtebasierte Clustering-Funktion auf das um den neuen Sensordatenpunkt (102, z) ergänzte Erreichbarkeitsdiagramm (312') anzuwenden und dem neuen Sensordatenpunkt (102, z) das daraus für ihn ermittelte Cluster und den Status zuzuordnen.

4.  Überwachungsvorrichtung nach einem der vorangehenden Ansprüche, wobei die Auswahl der benachbarten Trainingsdatenpunkte (x1, x2, x3) alle Trainingsdatenpunkte enthält, die einen vorgegebenen Abstand ($\varepsilon$_max) vom neuen Sensordatenpunkt (102, z) aufweisen.

5.  Überwachungsvorrichtung nach Anspruch 4, die derart ausgebildet ist, dem neuen Sensordatenpunkt (102, z) eine Kerndistanz mit dem Wert unendlich zuzuordnen, wenn die Anzahl von benachbarten Trainingsdatenpunkten (x1, x2, x3) geringer als eine vorgegebene Anzahl (MinPnt) ist.

6.  Überwachungsvorrichtung nach Anspruch 4, die derart ausgebildet ist, für jeden Trainingsdatenpunkt in der Auswahl der Trainingsdatenpunkte (x1, x2, x3) eine Erreichbarkeitsdistanz zum neuen Sensordatenpunkt (102, z) zu ermitteln und die niedrigste der ermittelten Erreichbarkeitsdistanzen dem neuen Sensordatenpunkt (102, z) als minimale Erreichbarkeitsdistanz (minRD) zuzuordnen.

7.  Überwachungsvorrichtung nach Anspruch 6, die derart ausgebildet ist, die Position des Trainingsdatenpunktes der Auswahl der Trainingsdatenpunkte (x1, x2, x3), der die niedrigste ermittelte Erreichbarkeitsdistanz aufweist, im Erreichbarkeitsdiagramm (312) als Vorgängerposition zu ermitteln und die darauffolgende Position als minimale Position für den neuen Sensordatenpunkt (102, z) zu ermitteln.

8.  Überwachungsvorrichtung nach Anspruch 6, die derart ausgebildet ist, den neuen Sensordatenpunkt (102, z) am Ende des Erreichbarkeitsdiagramms (312) einzufügen, wenn die Erreichbarkeitsdistanz eines jeden Trainingsdatenpunktes, der in der Abfolge nach der Vorgängerposition angeordnet ist, kleiner als die minimale Erreichbarkeitsdistanz (minRD) des neuen Sensordatenpunktes (102, z) ist.

9.  Überwachungsvorrichtung nach einem der vorangehenden Ansprüche, die derart ausgebildet ist, für alle neuen Sensordatenpunkte (102, z), die in einem Zeitfenster mit vorgegebener Dauer empfangen werden, oder für eine vorgegebene Mindestanzahl von zeitlich aufeinanderfolgenden neuen Sensordatenpunkten (102, z), die in der Analyseeinheit (202) ausgeführten Schritte durchzuführen und nur dann als anormal auszugeben, wenn die ermittelten Zuordnungen einer vorgegebenen Regel entsprechen.

10. Überwachungsvorrichtung nach Anspruch 9, wobei eine Regel eine minimale Anzahl von als anormal detektierte neue Sensordatenpunkte (102, z) ist.

11. Überwachungsvorrichtung nach Anspruch 9 oder 10, wobei eine Regel eine ansteigende Anzahl von als anormal detektierten neuen Sensordatenpunkten (102, z) in aufeinanderfolgenden Zeitfenstern ist.

12. Überwachungsvorrichtung nach einem der Ansprüche 9 bis 11, die zusätzlich eine Nutzerschnittstelle (204) aufweist und derart ausgebildet ist, die Dauer des Zeitfensters, die Mindestanzahl von neuen Sensordatenpunkten oder die Art der Regel zu empfangen.

13. Überwachungsvorrichtung nach einem der vorangehenden Ansprüche, wobei ein technisches System (100) ein oder mehrere Maschinen oder Geräte einer Automatisierungsanlage, einer Energieverteilungsanlage oder einer Energieerzeugungs- oder Energieförderungsanlage ist.

14. Verfahren zur Anomaliedetektion anhand von zeitlich fortlaufend ermittelten Sensordaten eines technischen Systems, umfassend die Schritte

   - Empfangen (S1) eines neuen Sensordatenpunktes (102, z) des technischen Systems,
   - für den neuen Sensordatenpunkt, Ermitteln (S2) einer minimalen Erreichbarkeitsdistanz (minRD) gegenüber einer Auswahl von benachbarten Trainingsdatenpunkten (x1, x2, x3), und
   - für den neuen Sensordatenpunkt (102, z), Ermitteln (S3) einer minimalen Position (xi) in der Abfolge der Trainingsdatenpunkte in einem Erreichbarkeitsdiagramm (312), das mittels einer dichtebasierten Clustering-Funktion mit vorbestimmten Trainingsdatenpunkten als Eingabewerte erstellt wurde und die Abfolge der Trainingsdatenpunkte aufsteigend nach einer Bearbeitungsreihenfolge der Trainingsdatenpunkte geordnet und in dem für jeden Trainingsdatenpunkt die Erreichbarkeitsdistanz (RD) angegeben ist,
   - Einfügen (S4) des neuen Sensordatenpunkts (102, z) im Erreichbarkeitsdiagramm (312) nach der minimalen Position (xi) und vor dem Trainingsdatenpunkt, der eine größere Erreichbarkeitsdistanz als die ermittelte minimale Erreichbarkeitsdistanz (minRD) aufweist,
   - dem neuen Sensordatenpunkt (102, z), Zuordnen (S5) eines bestimmten Clusters abhängig von seiner Position im ergänzten Erreichbarkeitsdiagramm (312') und Zuordnen eines Status als normal oder anormal abhängig von der minimalen Erreichbarkeitsdistanz (minRD), und
   - Ausgeben (S6) des zugeordneten Status und/oder des zugeordneten Clusters als Ergebnis der Anomaliedetektion.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach Anspruch 14 durchzuführen.

Fig. 1

Fig. 2

Fig. 3

Fig. 4

Fig. 5

Fig. 6

**Europäisches Patentamt**
**European Patent Office**
**Office européen des brevets**

**EUROPÄISCHER RECHERCHENBERICHT**

Nummer der Anmeldung

EP 20 19 1509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | H. HOTAIT ET AL: "Monitoring of Ball Bearing Based on Improved Real-Time OPTICS Clustering", JOURNAL OF SIGNAL PROCESSING SYSTEMS, 30. Juli 2020 (2020-07-30), XP055770215, US ISSN: 1939-8018, DOI: 10.1007/s11265-020-01571-w * das ganze Dokument * ----- | 1-15 | INV. G05B23/02 G06F16/35 |
| A | BENMAHDI D ET AL: "RT-OPTICS: real-time classification based on OPTICS method to monitor bearings faults", JOURNAL OF INTELLIGENT MANUFACTURING, CHAPMAN AND HALL, LONDON, GB, Bd. 30, Nr. 5, 27. November 2017 (2017-11-27), Seiten 2157-2170, XP036785555, ISSN: 0956-5515, DOI: 10.1007/S10845-017-1375-6 [gefunden am 2017-11-27] * das ganze Dokument * ----- | 1-15 | |
| A | ZHANG QIANG ET AL: "An OPTICS Clustering-Based Anomalous Data Filtering Algorithm for Condition Monitoring of Power Equipment", 15. Dezember 2015 (2015-12-15), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047343262, ISBN: 978-3-642-17318-9 [gefunden am 2015-12-15] * das ganze Dokument * ----- -/-- | 1-15 | RECHERCHIERTE SACHGEBIETE (IPC) G05B G06F |

Der vorliegende Recherchenbericht wurde für alle Patentansprüche erstellt

| Recherchenort | Abschlußdatum der Recherche | Prüfer |
|---|---|---|
| Den Haag | 1. Februar 2021 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................
& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung

EP 20 19 1509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FRANCESCOMARINO CHIARA DI ET AL: "Clustering-Based Predictive Process Monitoring", IEEE TRANSACTIONS ON SERVICES COMPUTING, IEEE, USA, Bd. 12, Nr. 6, 1. November 2019 (2019-11-01), Seiten 896-909, XP011760463, DOI: 10.1109/TSC.2016.2645153 [gefunden am 2019-12-09] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 1. Februar 2021 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 2 von 2